# EUROPÄISCHE PATENTANMELDUNG

(11) **EP 1 099 939 A2**
(43) Veröffentlichungstag der Anmeldung: **16.05.2001**
(21) Anmeldenummer: 00118038.9
(22) Anmeldetag: 23.08.2000
(51) Int. Cl.: G01F 1/698

(54) **Anordnung zur Abgasregelung mit einem Massensensor**

(30) Priorität: 09.11.1999 DE 19953718
(71) Anmelder: Pierburg Aktiengesellschaft, 41460 Neuss (DE)
(72) Erfinder: Lösing, Karl-Heinrich, Dr., 46519 Alpen (DE); Wienecke, Thomas, 41352 Korschenbroich (DE); Witkowski, Peter, 41363 Jüchen (DE)
(74) Vertreter: Dietrich, Barbara

(57) **Zusammenfassung**

Die Erfindung betrifft eine Anordnung zur Abgasregelung.

Bekannte Anordnungen zur Abgasregelung insbesondere bei Dieselmotoren weisen einen Luftmassensensor (2) im Luftansaugkanal einer Brennkraftmaschine auf. Ein dabei ermitteltes Sensorsignal wird zur eigenständigen Steuerung eines Abgasrückführsystems (AGR-System) benutzt.
Nachteilig bei den bekannten Anordnungen ist, daß hierbei eine indirekte Messung stattfindet, wodurch die Regelung der Abgasrückführung über die angesaugte Luft, nicht aber über das Abgas selbst erfolgt. Dadurch kommt es zu ungenauen Regelmeßwerten.

Der Erfindung liegt die Idee zugrunde, einen Luftmassensensor (7) als Abgasmassensensor direkt in die Abgasrückführleitung (6) vor einem Abgasrückführvertil (6) einzubinden, um so eine direkte Messung und Regelung des Abgases vornehmen zu können. Dazu wird vor dem Abgasmassensensor (7) eine Abgaskühlung (8) eingebaut, die die Abgasleitung (6) und damit die Abgase abkühlen. Der Abgasmassensensor (7) ist zudem gegen Hitze und Schmutz resistent.

## Beschreibung

Die Erfindung betrifft eine Anordnung zur Abgasregelung nach dem Oberbegriff des Patentanspruchs 1.

Bekannte Anordnungen zur Abgasregelung insbesondere bei Dieselmotoren weisen einen Luftmassensensor im Luftansaugkanal einer Brennkraftmaschine auf. Ein dabei ermitteltes Sensorsignal wird zur eigenständigen Steuerung eines Abgasrückführsystems (AGR-System) benutzt.

Einen solchen Luftmassensensor offenbart die DE 43 31 722 C2. Hierbei wird außerdem ein Verfahren zur Erfassung einer Luftstrommenge und ein Gerät zum Erfassen des Ausgangsstromes des Luftstrommengenmessers angegeben.

Weitere Luftmassensensoren werden in der DE 38 44 354 A1 oder auch in die DE 34 33 368 A1 offenbart.

Nachteilig bei den bekannten Anordnungen ist, daß hierbei eine indirekte Messung stattfindet, wodurch die Regelung der Abgasrückführung über die angesaugte Luft, nicht aber über das Abgas selbst erfolgt. Dadurch kommt es zu ungenauen Meß- und Regelwerten.

Die Aufgabe der Erfindung besteht nun darin, eine Anordnung anzugeben, mit der eine direkte und genaue Abgasrückführmessung für die Abgasregelung erfolgen kann.

Gelöst wird die Aufgabe durch die Merkmale des Patentanspruchs 1.

Der Erfindung liegt die Idee zugrunde, einen Luftmassensensor als Abgasmassensensor direkt in die Abgasrückführleitung vor ein Abgasrückführventil (AGR-Ventil) einzubinden, um so eine direkte Messung und Regelung des Abgases vornehmen zu können.

Dazu wird vor dem Abgasmassensensor eine Abgaskühlung eingebaut, die die Abgasleitung und damit die Abgase abkühlt. Der Abgasmassensensor ist zudem gegen Hitze und Schmutz resistent. Dazu ist es notwendig, daß die Temperaturdrift der Sensoren des Abgasmassensensors kompensiert wird, und daß die Sensoren so heiß gehalten werden, daß sich absetzender Schmutz aus den Abgasen verascht wird.

Weitere vorteilhafte Ausführungen sind in den Unteransprüchen enthalten.

Der Abgasmassensensor ist vorzugsweise so ausgeführt, daß dieser pulsierende Abgasströmungen und Abgasrückströmungen messen kann. Dazu weist der Abgasmassensensor jeweils zwei voneinander getrennt angebrachte Heizsensoren und Temperatursensoren auf, die zu zwei Wheatstone-Brücken verschaltet sind.

In einer weiteren vorteilhaften Ausgestaltung sind das AGR-Ventil und der Abgasmassensensor einteilig ausgeführt.

Anhand eines Ausführungsbeispieles mit Zeichnung soll die Erfindung näher erläutert werden.

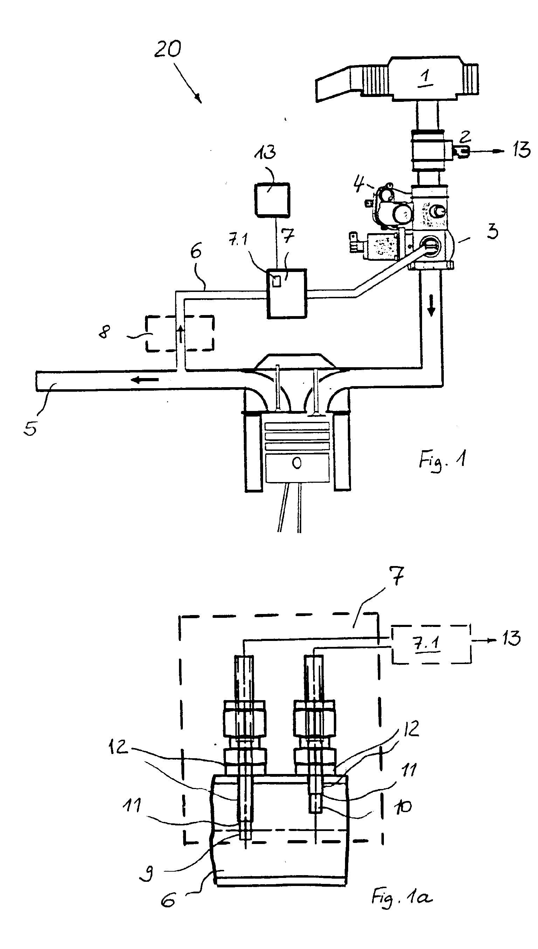

Es zeigt
**Fig. 1**
   eine Anordnung zur Abgasrückführmessung,
**Fig. 1a**
   eine Darstellung des Abgasmassensensors aus Fig.1,
**Fig. 2**
   ein AGR-Ventil mit dem Abgasmassensensor,
**Fig. 3**
   eine schematische Darstellung einer Wurzelheizung.

In Fig. 1 ist ein Abgasrückführsystem 20 mit einer Anordnung zur Abgasregelung aufgezeigt. Dabei ist mit 1 ein Luftfilter, mit 2 ein Luftmassensensor, mit 3 ein AGR-Ventil mit vorzugsweiser Lagerückmeldung und mit 4 eine Ansaugluftdrosselung bezeichnet, die in bekannter Art und Weise zusammenwirken. Zwischen dem AGR-Ventil 3 und einem Auspuffrohr 5 befindet sich eine Abgasrückführleitung 6.

Zusätzlich zu dieser bekannten Anordnung befindet sich in der Abgasrückführleitung 6 ein weiterer Luftmassensensor 7 als Abgasmassensensor. Die Abgasrückführleitung 6 weist vor dem Abgasmassensensor 7 einen Abgaskühler 8 auf, beispielsweise in Form einer Kühlwendel. Dieser hat die Aufgabe, die Abgasrückführleitung 6 sowie das Abgas auf vorzugsweise 300°C abzukühlen. Dies bedeutet, daß der nachfolgende Abgasmassensensor 7, insbesondere dessen Heiz- und Temperatursensoren 9, 10 , einem Temperaturbereich von bis zu 300°C ausgesetzt wird, wobei zeitweise auch bis zu 500°C auftreten können.

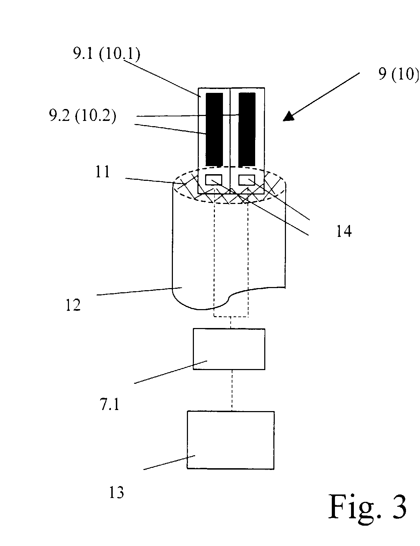

Der Abgasmassensensor 7 besitzt vorzugsweise zwei Heizsensoren 9 und zwei Temperatursensoren 10, die in der Abgasrückführleitung 6 eingebaut und durch eine Halterung 12 befestigt sind. Die Heizsensoren 9 und die Temperatursensoren 10 sind vorzugsweise jeweils als Doppel-Keramiksensoren ausgeführt und voneinander getrennt und beispielsweise versetzt angeordnet (Fig. 1a). Dabei sind die Sensoren 9, 10 auf je einem Keramikträger 9.1 bzw. 10.1 aufgebracht und in einer Membrane 9.2 bzw. 10.2 eingebettet (Fig. 3).

Die Sensoren 9, 10 sind in bekannter Art und Weise jeweils zu einer Wheatstone-Brücke verschaltet , die sich auf einem Bauteilträger 7.1 des Abgasmassensensors 7 befinden, wodurch durch Verschiebung des inneren Brückenverhältnisses die Menge des vorbei strömenden Abgases ermittelt wird. Die Richtungsermittlung des strömenden Abgases erfolgt durch den Vergleich der beiden Brückensignale. Ein jeweils erzeugtes elektrisches Signal wird auf eine Auswerteeinheit 13 gegeben. Diese steuert das AGR-Ventils 3 derart an, daß mehr oder weniger Abgase zurückgeführt werden.

Bekanntlich benötigen Direkteinspritzer eine hohe Verbrennungstemperatur, wobei hohe NOx-Schadstoffe entstehen. Die über die Abgasrückführleitung 6 zur erneuten Verbrennung zurückgeführte Abgasmenge wird nun durch den Abgasmassensensor 7 direkt gemessen. Durch die direkte Messung des Abgases und der daraus resultierenden Regelung des AGR-Ventils wird vermieden, daß eine Verqualmung stattfindet oder unzulässig hohe Rußwerte (NOx- Werte) abgestoßen werden.

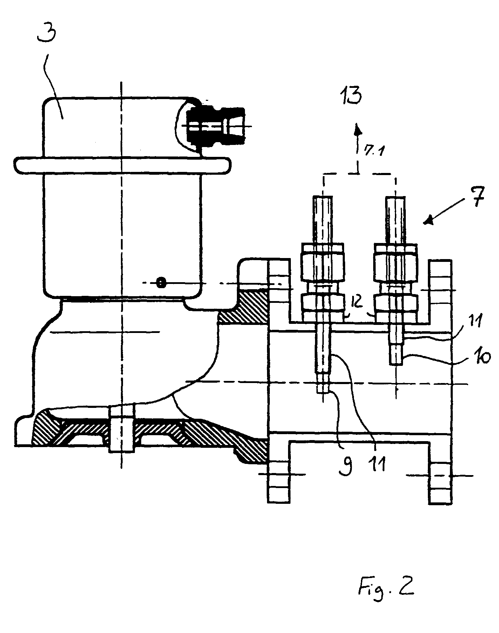

In einer vorteilhaften Ausführung sind das AGR-Ventil 3 und der Abgasmassensensor 7 einteilig ausgebildet, wie in Fig. 2 dargestellt. Nicht separat dargestellt sind auch hierbei die Wheatstone-Brücken sowie die eigentliche Sensorelektronik. Diese können trotz hoher Temperaturen im Bereich der Abgasrückführleitung 6 in direkter Nähe zu den Heizsensoren 9 und Temperatursensoren 10 auf dem Bauteilträger 7.1 integriert sein.

Damit durch den Abgasmassensensor 7 eine genaue Messung erfolgen kann, wird die Temperaturdrift der Sensoren 9, 10 kompensiert, was u.a. durch Bauelemente mit nichtlinearen Eigenschaften, z.B. einen NTC-Widerstand in der Schaltung auf dem Bauteilträger 7.1, erfolgen kann (nicht näher dargestellt).

Um den Verschmutzungsproblemen bei der Abgasmessung zu begegnen, ist als eine weitere Maßnahme vorgesehen, die Sensoren 9 derart zu heizen, daß sich absetzender Schmutz aus den Rußpartikeln verascht wird. Dazu werden die Sensoren 9 auf bis zu 300°C gegenüber der Abgastemperatur erhitzt. Als Maßnahme für die Temperatursensoren 10 können von hinten auf dem Keramikträger 10.1 Heizwiderstände zum Freiglühen vorgesehen werden (nicht näher dargestellt). Die veraschten Partikel werden bedingt durch ihre Leichtigkeit durch die Abgasströmung von den Sensoren 9 und 10 abtransportiert.

Die Sensoren 9,10 sind fußseitig mit ihren Keramikträgern 9.1, 10.1 in einer Glas-Keramik-Vergußmasse 11 eingefaßt, so daß diese Verbindung zur Halterung 12 des Abgasmassensensors 7 Temperaturen bis zu 600°C aufnehmen kann, ohne daß sich die Keramikträger 9.1, 10,1 der Sensoren 9,10 von der Halterung 12 lösen.

Bekanntlich fließt insbesondere im Bereich der Halterung 12 Wärme des Keramiksubstrates des Keramikträgers an die Halterung 12 ab. Dabei stellt sich entsprechend dem Wärmestrom ein Temperaturgradient ein. Ändert sich infolge veränderlicher Anströmung des Keramikträgers 9.1, 10.1 mit den Sensoren 9 oder 10 das Wärmegleichgewicht, so muß der Keramikträger 9.1, 10.1 zusätzlich beheizt oder abgekühlt werden. Dies bewirkt, daß die Meßanordnung während dieser Zeit träge reagiert. Um dieser Trägheit entgegen zu treten und die Pulsations-Ansprechzeit beeinflussen zu können, kann als eine weitere Maßnahme vorgesehen werden, eine Art Wurzelheizung zwischen den Sensoren 9, 10 und dem elektrischen Abgriff zur elektrischen Auswerteeinheit 13 anzubringen. Dazu werden auf dem Keramikträger 9.1, 10.1 der Sensoren 9 oder 10 zusätzlich im fußseitigen Einspannbereich zwei Schichten 14 aufgebracht, die von den jeweiligen Sensoren 9, 10 elektrisch isoliert sind. Die im Halterungsbereich aufgebrachten Schichten 14 dienen nun dazu, das Keramiksubstrat 9.1 oder 10.1 an diesen Stellen nachzuheizen, um jederzeit das notwendige Wärmegleichgewicht beizubehalten, so daß die Wärme am Keramikträger 9.1, 10.1 innerhalb der Abgasrückführleitung 6 gleich groß der Wärme des Keramikträgerteils an der Halterung 12 ist.

In vorteilhafter Art und Weise werden die Meßergebnisse des Luftmassensensors 3 im Luftansaugkanal und die des Abgasmassensensors 7 in der Abgasrückführleitung 6 miteinander kombiniert in der Auswerteeinheit 13 ausgewertet, so daß eine genauere Abgasregelung durch das AGR-Ventil 3 auch unter der Berücksichtigung der zugeführten Frischluft erfolgen kann.

Diese Anordnung kann auch bei direkteinspritzenden Systemen mit Otto-Motoren angewendet werden.

Es versteht sich, daß die beiden Heizsensoren 9 und die beiden Temperatursensoren 10 auch jeweils auf getrennten Keramikträgern aufgebracht sein können, so daß der Abgasmassensensor 7 aus vier einzelnen Keramikträgern aufgebaut ist.

## Patentansprüche

1. Anordnung zur Abgasregelung, aufweisend ein AGR-Ventil, sowie eine Abgasrückführleitung, dadurch gekennzeichnet, daß ein Luftmassensensor (7) als Abgasmassensensor direkt in der Abgasrückführleitung (6) vor dem AGR-Ventil (3) eingebracht ist.

2. Anordnung nach Anspruch 1, dadurch gekennzeichnet, daß in der Abgasrückführleitung (6) ein Abgaskühler (8) integriert ist.

3. Anordnung nach Anspruch 1 oder 2, dadurch gekennzeichnet, daß das AGR-Ventil (3) und der Abgasmassensensor (7) einteilig ausgeführt sind.

4. Anordnung nach einem der Ansprüche 1 bis 3, dadurch gekennzeichnet, daß der Abgasmassensensor (7) zwei Heizsensoren (9) und zwei Temperatursensoren (10) besitzt, die zu zwei Wheatstone-Brücken verschaltet sind.

5. Anordnung nach einem der vorgenannten Ansprüche, dadurch gekennzeichnet, daß die Heizsensoren (9) und Temperatursensoren (10) als Doppel-Keramiksensoren ausgeführt sind.

6. Anordnung nach einem oder mehreren der vorgenannten Ansprüche, dadurch gekennzeichnet, daß eine Temperaturdrift der Heizsensoren (9) und der Temperatursensoren (10) durch Bauelemente mit nichtlinearen Eigenschaften kompensiert wird.

7. Anordnung nach einem oder mehreren der vorgenannten Ansprüche, dadurch gekennzeichnet, daß die Heizsensoren (9) derart beheizt werden, daß sich absetzender Schmutz aus den Rußpartikeln des Abgases verascht wird.

8. Anordnung nach einem oder mehreren der vorgenannten Ansprüche, dadurch gekennzeichnet, daß auf dem Keramikträger (10.1) der Temperatursensoren (10) von hinten Heizwiderstände zum Freiglühen angebracht sind.

9. Anordnung nach einem der vorgenannten Ansprüche, dadurch gekennzeichnet, daß die Heizsensoren (9) und die Temperatursensoren (10) sind fußseitig mit ihren Keramikträgern (9.1, 10.1) in einer Glas-Keramik-Vergußmasse (11) eingefaßt sind.
